# EUROPÄISCHE PATENTSCHRIFT

(11) **EP 2 254 701 B1**
(45) Veröffentlichungstag und Bekanntmachung des Hinweises auf die Patenterteilung: **10.05.2017**
(21) Anmeldenummer: 08716604.7
(22) Anmeldetag: 18.03.2008
(51) Int. Cl.: B03B 9/06, B29B 17/02

(54) **VERFAHREN UND ANLAGE ZUM AUFBEREITEN VON METALLARMEN KUNSTSTOFFABFÄLLEN**
METHOD AND SYSTEM FOR CONDITIONING LOW-METAL PLASTIC WASTE
PROCÉDÉ ET INSTALLATION POUR LE TRAITEMENT DE DÉCHETS DE MATIÈRES PLASTIQUES À FAIBLE TENEUR EN MÉTAUX

(43) Veröffentlichungstag der Anmeldung: 01.12.2010
(73) Patentinhaber: Volkswagen Aktiengesellschaft, 38440 Wolfsburg (DE); SiCon GmbH, 57271 Hilchenbach (DE)
(72) Erfinder: DEN DUNNEN, Bram, 38124 Braunschweig (DE); KNUST, Michael, 38550 Isenbüttel (DE); GUSCHALL, Heiner, 57271 Hilchenbach (DE)
(86) Internationale Anmeldenummer: PCT/EP2008/002146
(87) Internationale Veröffentlichungsnummer: WO 2009/115096

(56) Entgegenhaltungen:
- EP-A- 0 479 293
- DE-A1- 4 222 379
- DE-A1- 19 755 629
- DE-A1- 19 915 481

## Beschreibung

Die Erfindung betrifft ein Verfahren und eine Anlage zur Aufbereitung von metallarmen Kunststoffabfällen, insbesondere von Shredder-Rückständen metallhaltiger Abfälle, insbesondere von metallarmen, kunststoffreichen Stoffgemischen, die zumindest teilweise in Fahrzeug-Shredderprozessen erzeugt wurden, bei dem die Kunststoffabfälle zumindest in eine Leichtfraktion (Rohflusen) und eine Schwerfraktion (kunststoffreiche Fraktion) aufgetrennt werden.

Ein Verfahren zur Aufbereitung von Shredder-Rückständen ist beispielsweise aus der europäischen Patentschrift EP 1 332 001 B1 bekannt. Bei dem hier beschriebenen Verfahren erfolgt zunächst in separaten Vorprozessen eine Aufbereitung einer Shredder-Leichtfraktion und eine Aufbereitung einer Shredder-Schwerfraktion. Während des Vorprozesses der Aufbereitung der Shredder-Leichtfraktion erfolgt nach Abtrennung einer Schaumstoff- und gegebenenfalls einer Faserfraktion eine Zerkleinerung der verbleibenden Fraktion in einen Austrag < 50 mm. Von der zerkleinerten Fraktion wird eine ferromagnetische Fraktion abgetrennt. Die verbleibende nichtferromagnetische Fraktion wird einem Zerkleinerungsprozess zugeführt, in dem ein weiterer Aufschluss des Materials erfolgt. Von dem gut aufgeschlossenen Material wird in einem nachgeschalteten Verfahrensschritt eine Sandfraktion < 4 mm abgetrennt. Die verbleibende Fraktion wird einer Windsichtung und einer Dichtetrennung unterzogen und so die Fraktion in eine leichte Fraktion aus Flusen und eine schwere Fraktion getrennt. Die Shredder-Schwerfraktion wird einer Separation der ferromagnetischen Bestandteile unterzogen. Es folgt eine Klassierung des Reststromes und eine Abscheidung von nichteisenmetallhaltigen Fraktion. Dies kann derart erfolgen, dass zunächst eine Klassierung in Fraktionen größer und kleiner 20 mm erfolgt und diese Fraktionen separat dem Metallabscheider zugeführt werden. Im Vordergrund steht dabei eine möglichst saubere stoffliche Trennung in eine nichteisenmetallhaltige Fraktion und eine verbleibende metallarme Fraktion. In einer nachfolgenden Klassierung erfolgt die Abscheidung einer Sandfraktion mit einem Korndurchmesser kleiner 6 mm. Die verbleibende grobkörnige metallarme Fraktion wird anschließend in eine schwere Fraktion sowie eine hochdichte Restfraktion aufgetrennt. In dem sich anschließenden Hauptprozess werden die schweren Fraktionen aus den beiden Vorprozessen zusammengefasst. Diese werden zunächst in einem weiteren Zerkleinerungsschritt aufgeschlossen. Nach der Zerkleinerung erfolgt eine Dichtetrennung und die Abtrennung einer Leichtfraktion bestehend aus Kunststoff in gemahlener Form. Die verbleibende Schwerfraktion besteht größtenteils aus Nichteisen-Metallen.
Des Weiteren ist aus der deutschen Patentschrift DE 103 34 646 B4 ein Verfahren und eine Anlage zur Aufbereitung der Shredderleichtfraktion aus der Zerkleinerung von Schrotten und metallhaltigen Abfällen bekannt, bei dem die Shredderleichtfraktion im Anfallzustand die Prozesse Zerkleinerung, Klassierung und Luftstromsortierung durchläuft. Dabei wird das Aufgabegut zunächst im Rahmen einer selektiven Zerkleinerung so beansprucht, dass die spröden mineralischen Komponenten wie zum Beispiel Glas, Keramik, Beton und Sand, bei einer nachfolgenden Siebklassierung vollständig in das Feingut, und die mittels Prallbeanspruchung weitestgehend unzerkleinerbaren, restlichen Bestandteile, wie zum Beispiel Kunststoff, Gummi, Metalle, in gröberen Stückgrößen ausgebracht werden. Für das Feingut sind dabei Stückgrößen < 2 mm und für die unzerkleinerten oder unzerkleinerbaren Bestandteile Stückgrößen 2 -20 mm und > 20 mm angegeben.

In der deutschen Offenlegungsschrift DE 10 2004 045 821 B4 wird ein Verfahren und eine Anlage zur Aufbereitung der Shredderleichtfraktion aus der Zerkleinerung von Schrotten und Metallischen Abfällen vorgeschlagen, bei dem das Material zunächst Auflockerungs- und Trocknungsprozess zugeführt. Sind im Aufgabegutstrom noch sicherheitsrelevante Massivteile, dickwandige Metallstücke und grobe Steine vorhanden, so werden diese mit Hilfe eines Schwergutauslesers abgetrennt. Anschließend wird die Shredderleichtfraktion einer Siebklassierung unterzogen, wobei zunächst bei Grobgut > 20 mm sowie ein Zwischenprodukt < 20 mm entsteht. Das Zwischenprodukt wird zur Abtrennung des Feingutanteiles (Sandfraktion) < 2 mm einer weiteren Siebklassierung zugeführt. Wodurch neben der Sandfraktion eine Fraktion mit einer Stückgröße 2 - 20 mm entsteht. Mit den Fraktionen der Stückgrößen 2 - 20 mm und > 20 mm wird nachfolgend eine Aerostromsortierung mittels mehrstufig angeordneter Zick-Zack-Sichter durchgeführt, wobei durch unterschiedliche Luftgeschwindigkeiten in den einzelnen Sichtstufen zwei aus Fasern, Schaumstoffen, Folien und Holz bestehende Produkte, ein bzw. zwei vor allem aus stückigen Kunststoffen und Gummi bestehende Produkte sowie ein metallreiches und die gröberen mineralischen Bestandteile enthaltendes Produkt entstehen.

Des Weiteren ist aus der deutschen Patentschrift DE 196 29 473 C2 ein Verfahren zur Aufbereitung eines Kunststoffgemisches bekannt, welches beim Fahrzeug-Recycling entsteht. In einem ersten Verfahrenschritt werden hier die ferromagnetischen Bestandteile mittels eines Magnetabscheiders getrennt. Danach ist eine Grobsiebung > 10 mm vorgesehen, nach der die Bestandteile mit einer Korngröße > 10 mm einem Zerkleinerungsvorgang unterzogen werden und wiederum der Grobsiebung zugeführt werden. Die Bestandteile mit einer Korngröße < 10 mm werden dann einer Feinsiebung > 2 mm unterworfen und so eine Rohsandfraktion < 2 mm abgetrennt. Die verbleibende Fraktion wird danach in einem weiteren Schritt einer Trennung von Leicht- und Schwergut unterzogen.

Aus der DE 197 55 629 A1 ist ferner ein Verfahren zur Aufbereitung der Shredder-Leichtfraktionen aus Shredderanlagen bekannt. Die Shredder-Leichtfraktion soll dabei soweit in ihre stofflichen Bestandteile zerlegt werden, dass die einzelnen Bestandteile einer stofflichen und/oder energetischen Verwertung zugänglich sind. Hierbei erfolgt zunächst eine Vorabsiebung, bei der ein Feingutstrom und ein Grobgutstrom erzeugt wird. Der Feingutstrom wird anschließend in einer Feintrennstufe in vier Kornklassen aufgeteilt und mittels mehrerer Luftsetzherde in eine Metall- und eine Inertfraktion (Shreddersand) aufgetrennt.
Der Grobgutstrom mit einer Zerkleinerungsstufe zugeführt, wobei in einer Nachsiebstufe davon wiederum eine aus Shreddersand und Metallgranulat bestehende Fraktion abgetrennt und der erwähnten Feintrennstufe zugeführt wird. Der verbleibende Grobgutstrom wird in eine Leichtfraktion und eine Schwerfraktion gesichtet und jeweils wiederum einer Feintrennstufe zugeführt. Im Ergebnis werden durch das Verfahren die verwertbaren Fraktionen Shreddersand, Shreddergranulat, Shredderflusen und Metallgranulat erzeugt.

Die DE 42 22 379 A1 beschreibt ein Verfahren zur Aufbereitung von Haus-und Gewerbemüll. Unter Einsatz von Zerkleinerung-, Fe-Abscheidungs-, Siebungs-, Sichtungs- und Trocknungsverfahren erfolgt eine Trennung des Mülls in wiederverwertbare Rohstoffe, eine schadstoffbefreite Fraktion sowie eine schadstoffangereicherte Fraktion. Während die schadstoffbefreite Fraktion wieder verwertet wird, kann mithilfe der schadstoffangereicherten, energiereichen Fraktion, die für das Gesamtverfahren notwendige Energie erzeugt werden. Gleichzeitig erfolgt eine Reinigung bzw. Wiederverwertung der dabei entstehenden Rauchgase und Grobasche, wobei die anfallenden Abfallstoffe kalziniert werden.

Des Weiteren ist aus der EP 0 479 293 A1 ein Verfahren zur Auftrennung von metallhaltigen Müllkomponenten aus Hausmüll bekannt. Dabei werden die metallhaltigen Müllkomponenten über ein Förderband einem Überbandmagneten zur Abtrennung leichter Fe-Komponenten und danach einem Trommelmagneten zur Abtrennung schwerer Fe-Komponenten zugeführt. Das verbleibende nicht-magnetische Material wird einem Horizontalgebläse zugeführt, wobei durch den Luftstrom eine Leichtfraktion von schweren Gegenständen abgetrennt wird. Die Leichtfraktion wird anschließend einer Messermühle zugeführt. Nach der Zerkleinerung wird das Material einem Aspirateur (Getreidereinigungsmaschine) mit zwei Schwingsieben und einem Windsichter (Steigsichter) zugeführt, wobei eine Klassierung in mehrere Leichtfraktionsklassen (Kunststoff, Aluminium und nicht flugfähiges Material aus schwereren Metallpartikeln) erfolgt, die einer getrennten Entsorgung zugeführt werden können.

Schließlich beschreibt die DE 199 15 481 A1 ein Verfahren zur Gewinnung organischer und anorganischer Bestandteile aus Materialien einer Shredder-Leichtfraktion. Um die gewonnenen Bestandteile in hohem Umfang wieder verwenden zu können, wird vorgeschlagen, dass nach einer Vorsiebung bestimmte Materialien der Shredder-Leichtfraktion vorzerkleinert, Eisenteile und stahlhaltige Verbundteile daraus entfernt, vorzerkleinerte Materialien hauptzerkleinert, die Materialien getrocknet, gröberes organisches Leichtgut aus den getrockneten Materialien durch Vorsichtung getrennt, die verbleibenden Materialien in zumindest zwei Korngrößen durch Siebe getrennt und die so gewonnenen Fraktionen in anorganische und organische Bestandteile gesichtet werden.

Die Aufgabe der Erfindung betrifft ein Verfahren und eine Anlage zur Verfügung zu stellen, mit denen verschleißreduziert metallarme Kunststoffe verarbeitet werden können und in dem mechanischen Aufbereitungsprozess qualitativ hochwertige Rohfraktionen erhalten werden, wodurch in folgenden Veredlungsprozessen stofflich verwertbare Fraktionen erzeugt werden können. Des Weiteren sollen abgetrennte nichtferromagnetische Metallteile bereits in einem frühen Stadium der Aufbereitung einer Verwertung zur Verfügung stehen.

Die Aufgabe wird durch ein Verfahren zur Aufbereitung von metallarmen Kunststoffabfällen nach dem Patentanspruch 1 und eine Anlage zur Aufbereitung von metallarmen Kunststoffabfällen nach dem Patentanspruch 10 gelöst. Vorteilhafte Aus- und Weiterbildungen sind in den Unteransprüchen dargestellt.

Gemäß dem Verfahren, bei dem die metallarmen Kunststoffabfälle in eine Leichtfraktion und eine Schwerfraktion aufgetrennt werden, werden die nachfolgenden Verfahrensschritte nacheinander durchgeführt:
- Abtrennen von ferromagnetischen Bestandteilen aus den kunststoffreichen Abfällen,
- Abtrennen einer ersten Rohsandfraktion,
- Zerkleinern der nach der Abtrennung der ersten Rohsandfraktion verbleibenden metallreduzierten kunststoffreichen Fraktion,
- Abtrennen einer zweiten Rohsandfraktion nach der Zerkleinerung der verbleibenden kunststoffreichen Fraktion,
- Auftrennen der verbleibenden kunststoffreichen in eine Leichtfraktion und eine Schwerfraktion.

Ein Aspekt des Verfahrens ist hier die Abtrennung der ersten Rohsandfraktion nach dem Abtrennen der ferromagnetischen Bestandteile aus den kunststoffreichen Abfällen, wodurch ein Teil der Bestandteile, die nicht der aufzuarbeitenden kunststoffreichen Fraktion zuzurechnen ist, bereits sehr frühzeitig den kunststoffreichen Abfällen entzogen wird und somit nur die in diesem Verfahrensschritt abtrennbaren Bestandteile dem weiteren Prozess unterworfen sind. Damit können dem Aufbereitungsprozess größere Mengen tatsächlich noch aufzubereitendes Material zugeführt werden. Des Weiteren werden die Verschleißkosten in den nachfolgenden Verfahrensschritten reduziert.

Nach einer vorteilhaften Ausbildung des Verfahrens erfolgt die Abtrennung der ersten Rohsandfraktion durch Siebung, insbesondere durch eine Siebung mit einer Lochgröße im Bereich von 10 -14 mm, vorzugsweise im Bereich von 10-20 mm.

Die Abtrennung der zweiten Rohsandfraktion erfolgt vorzugsweise ebenfalls durch Siebung, jedoch vorzugsweise durch eine Siebung mit einer Lochgröße im Bereich von 4 - 8 mm, insbesondere mit einer Lochgröße von 4 - 6 mm.

Nach dem erfindungsgemäßen Verfahren erfolgt nach dem Verfahrensschritt des Abtrennens der ersten Rohsandfraktion ein Verfahrensschritt einer Abtrennung von nichtferromagnetischen Metallteilen. Dadurch wird erreicht, dass bereits in diesem Aufbereitungsstadium ein großer Teil der nichtferromagnetischen Metallteile abgetrennt werden und nicht erst bei der nachfolgenden Veredelung der einzelnen Fraktionen. Außerdem stehen diese Bestandteile dadurch in einem früheren Stadium der Aufbereitung einer Verwertung wieder zur Verfügung. Die Abscheidung der Metallteile kann auch als gestufte Abscheidung vorgesehen sein, wobei in der ersten Stufe nochmals eine Abscheidung von ferromagnetischen Bestandteilen und in der zweiten Stufe eine Abtrennung der nichtferromagnetischen Metallteile erfolgt. Die Abtrennung der nichtferromagnetischen Metallteile kann entweder über eine Wirbelstomabscheidung oder über eine induktive Metalltrennung erfolgen.

Nach der Abtrennung der nichtferromagnetischen Metallteile ist eine Schwergutabtrennung vorgesehen. Während diesem Prozessschritt werden grobe und schwere Teile, beispielsweise durch eine Luftstromabtrennung entfernt, wodurch der Verschleiß in den nachfolgenden Verfahrenschritten ebenfalls reduziert wird.

Gemäß einer Ausbildung des Verfahrens erfolgt die Auftrennung der verbleibenden kunststoffreichen Fraktion in die Leichtfraktion und die Schwerfraktion mittels Windsichtung.

Eine weitere vorteilhafte Ausbildung des erfindungsgemäßen Verfahrens sieht vor, dass die Zerkleinerung der nach der Abtrennung der ersten Rohsandfraktion verbleibenden kunststoffreichen Fraktion derart durchgeführt wird, dass das Volumen der in der kunststoffreichen Fraktion enthaltenden Bestandteile der Leichtfraktion vergrößert wird, wodurch in dem späteren Verfahrensschritt der Auftrennung der Kunststofffraktion in eine Leichtfraktion und eine Schwerfraktion diese Auftrennung sauberer und mit geringeren Aufwand erfolgen kann.

Nach einer Ausbildung der Erfindung weisen die aufzubereitenden metallarmen kunststoffreichen Abfälle einen Metallanteil von < 20 %, insbesondere ca. 5 % an der Gesamtmenge auf.

Vorzugsweise entsteht nach dem erfindungsgemäßen Verfahren eine kunststoffreiche Leichtfraktion mit einem Schüttgutgewicht < 0,2 t/m³ im Mittel und eine kunststoffreiche Schwergutfraktion mit einem Schüttgutgewicht > 0,3 t/m³.

Gemäß der Erfindung können die aufzubereitenden kunststoffreichen Abfälle zumindest zum Teil Shredder-Rückstände metallhaltiger Abfälle, vorzugsweise zumindest zum Teil metallarme kunststoffreichen Abfälle aus Fahrzeug-Shredderprozessen sein und insbesondere eine Shredder-Leichtfraktion und/oder eine Shredder-Schwerfraktion enthalten.

Die Anlage zur Aufbereitung von metallarmen Kunststoffabfällen weist nacheinander angeordnete Mittel auf, mittels derer nacheinander zumindest die Verfahrensschritte:
- Abtrennen von ferromagnetischen Bestandteilen aus den kunststoffreichen Abfälle,
- Abtrennen einer ersten Rohsandfraktion,
- Zerkleinern der nach dem Abtrennen der ersten Rohsandfraktion verbleibenden kunststoffreichen Abfälle,
- Abtrennen einer zweiten Rohsandfraktion nach dem Zerkleinern der verbleibenden Kunststofffraktion,
- Auftrennen der verbleibenden kunststoffreichen Abfälle in eine Leichtfraktion und eine Schwerfraktion
durchführbar sind.

Ein Aspekt der Anlage ist der Einsatz einer Einrichtung zum Abtrennen der ersten Rohsandfraktion nach dem Abtrennen der ferromagnetischen Bestandteile aus den Kunststoffabfällen, wodurch ein Teil der Bestandteile, die nicht der aufzuarbeitenden Kunststofffraktion zuzurechnen ist, bereits sehr frühzeitig den kunststoffreichen Abfälle entzogen wird und somit nur die verbleibenden Bestandteile dem weiteren Prozess unterworfen sind. Damit können dem Aufbereitungsprozess größere Mengen tatsächlich noch aufzubereitendes Material zugeführt werden. Des Weiteren werden die Verschleißkosten in den nachfolgenden Teilen der Anlage reduziert.

Gemäß einer Ausbildung der erfindungsgemäßen Anlage ist als Mittel für das Abtrennen der ferromagnetischen Bestandteile ein Magnetabscheider vorgesehen.

Des Weiteren ist nach einer Weiterbildung als Mittel zum Abtrennen der ersten Rohsandfraktion eine Siebeinrichtung vorgesehen, vorzugsweise mit einer Lochgröße im Bereich von 10-14 mm, insbesondere mit einer Lochgröße im Bereich von 10-12 mm.

Als Mittel zum Abtrennen der zweiten Rohsandfraktion kann ebenfalls eine Siebeinrichtung, insbesondere mit einer Lochgröße im Bereich von 4-8 mm, vorzugsweise mit einer Lochgröße im Bereich von 4 - 6 mm, zum Einsatz kommen.

Bei der erfindungsgemäßen Anlage sind den Mitteln zum Abtrennen der ersten Rohsandfraktion Mittel zum Abtrennen von nichtferromagnetischen Metallteilen (Metallfraktion) nachgeschaltet. Als Mittel für das Abtrennen der nichtferromagnetischen Metallfraktion können Mittel zur Wirbelstromabscheidung oder Mittel zur induktiven Metalltrennung auf Basis der elektrischen Leitfähigkeit der Bestandteile zum Einsatz kommen.

Durch die hier vorgesehene Abtrennung der nichtferromagnetischen Metallfraktion wird erreicht, dass bereits in diesem Aufbereitungsstadium ein großer Teil der nicht- ferromagnetischen Metallteile abgetrennt werden und nicht erst bei der nachfolgenden Veredelung der einzelnen Fraktionen. Außerdem stehen diese Bestandteile dadurch in einem früheren Stadium der Aufbereitung einer Verwertung wieder zur Verfügung.

Als Mittel zur sensitiven Metallabtrennung kann beispielsweise ein Metallseparator zum Einsatz kommen, induktiv auf Basis der elektrischen Leitfähigkeit der Bestandteile arbeitet.

Bei der Erfindung sind den Mitteln zum Abtrennen von nichtferromagnetischen Metallfraktionen Mittel zur Abtrennung von Schwergut, vorzugsweise mittels Luftstrom, zur Separierung von Schwergut vorgesehen. Durch die Abtrennung von groben Bestandteilen kann der Verschleiß der nachfolgenden Teile der Anlage reduziert werden.

Eine weitere Ausbildung der Erfindung sieht vor, dass die Mittel zum Auftrennen der verbleibenden kunststoffreichen Fraktion in eine Leichtfraktion und eine Schwerfraktion Mittel zur Windsichtung sind.

Weiterhin kann vorgesehen sein, dass die Mittel zum Zerkleinern der nach der Abtrennung der ersten Rohsandfraktion verbleibenden Fraktion derart ausgebildet sind, dass das Volumen der in der kunststoffreichen Fraktion enthaltenen Bestandteile der Leichtfraktion vergrößert wird, wodurch die nachfolgende Auftrennung der kunststoffreichen Fraktion in eine Leichtfraktion und eine Schwerfraktion sauberer und mit geringeren Aufwand erfolgen kann.

Nachfolgend wird die Erfindung anhand eines Ausführungsbeispiels näher beschrieben, die zugehörigen Figur zeigt ein schematisches Fließdiagramm der nacheinander folgenden Prozessschritte zum Erhalt einer kunststoffreichen Leichtfraktion (Rohflusen) LF und einer kunststoffreichen Schwerfraktion (Rohgranulat) SF, die beispielsweise einem Shredderprozess von Altfahrzeugen nachgeschaltet sein können. Neben den metallarmen kunststoffreichen Abfällen aus einem Shredderprozess können auch andere kunststoffreiche Abfälle mit Hilfe der Erfindung aufbereitet werden. Bei der Verwertung von Altfahrzeugen werden zunächst in einem an sich bekannten vorgeschalteten Shredderprozess in einem Shredder metallhaltige Abfälle durch einen Zerkleinerungsprozess aufgeschlossen. Im Nachgang erfolgt eine Abtrennung einer flugfähigen Shredder-Leichtfraktion SLF durch eine Absaugeinrichtung. Der nach der Absaugung verbleibende schwere, nichtflugfähige Stoffstrom wird auf einem Magnetabscheider in eine ferromagnetische und eine nichtferromagnetische Fraktion getrennt. Die ferromagnetische Fraktion wird als Shredderschrott bezeichnet und stellt das primäre, direkt in der Metallurgie einsetzbare Produkt des Shredders dar. Die verbleibende schwere nichtferromagnetische Fraktion wird als Shredder-Schwerfraktion SSF bezeichnet.

Eine andere Möglichkeit eines Shredderprozesses besteht darin, dass im Shredderprozess die metallhaltigen Abfälle durch Zerkleinerung aufgeschlossen werden und im Nachgang eine Trennung von einer metallhaltigen Fraktion oder Fraktionen und einer metallarmen, kunststoffreichen Fraktion erfolgt.

Die Shredder-Leichtfraktion SLF wird allein oder zusammen mit der Shredder-Schwerfraktion SSF und gegebenenfalls mit weiteren metallarmen Kunststoffabfällen gemäß der Erfindung weiter aufbereitet und werden wenn sie dem erfindungsgemäßen Prozess unterworfen werden als metallarme kunststoffreiche Abfälle KA bezeichnet. Diese kunststoffreichen Abfälle weisen einen Metallanteil von < 20%, vorzugsweise einen Metallanteil im Größenbereich von 5 % auf.

Für die Einspeisung der metallarmen kunststoffreichen Abfälle sind ein oder mehrere Aufgabebehälter B1 und/oder B2 vorgesehen, um den erfindungsgemäßen Aufbereitungsprozess von vorgelagerten Prozessen, beispielsweise den Shredder-Prozess abzukoppeln.

In einem ersten Verfahrenschritt V1 werden die ferromagnetischen Bestandteile FE mittels eines Magnetabscheiders MA1 als ferromagnetische Fraktion abgetrennt, die damit einem metallurgischen Aufarbeitungsprozess zur rohstofflichen Wiederverwertung zugeführt werden können. Darauf folgt eine Abtrennung V2 einer ersten Rohsandfraktion RS1 mittels einer Siebeinrichtung SE1, die im Ausführungsbeispiel eine Lochgröße im Bereich von 10 -12 mm aufweist. Durch die Abtrennung dieser Rohsandfraktion werden die nachfolgenden Prozessschritte bezüglich der abgetrennten Rohsandfraktion entlastet. An den Verfahrensschritt V2 schließt sich ein Prozessschritt "Abscheidung von nichtferromagnetischen Metallbestandteilen" (nichtferromagnetische Metallfraktion), wie Kupfer, Messing und Aluminium an. Vorzugsweise können hier Mittel NE1 zur Wirbelstromabscheidung oder zur sensitiven Metallabtrennung mittels Farb- oder Fehlfarbendetektion zum Einsatz kommen. Bewährt hat sich hier der Einsatz der Anlage VARISORT der Firma S & S GmbH. Der nachfolgende Prozessschritt V4 der Abtrennung grober Bestandteile reduziert maßgeblich den Verschleiß im nächsten Prozessschritt V5 der Hauptzerkleinerung. Zum Einsatz können im Prozessschritt V4 zur Abtrennung der groben Bestandteile SG Mittel ST zur Luftstromtrennung, sogenannte Air Knife-Systeme, kommen. Nach der Abtrennung des Schwergutes erfolgt im Prozessschritt V5 eine Zerkleinerung der verbleibenden Fraktionen mittels einer Hammermühle MH. Die Zerkleinerung erfolgt dabei derart, dass das Volumen der in den verbleibenden Fraktionen enthaltenen Leichtfraktion (Rohflusen) LF vergrößert wird, wodurch in einem späteren Prozessschritt V7 eine verbesserte und fraktionssaubere Auftrennung der verbleibenden Fraktionen in eine Leichtfraktion (Rohflusen) LF und eine Schwerfraktion (Rohgranulat) SF möglich ist. Zur Auftrennung der verbleibenden Fraktion sind nach dem, Ausführungsbeispiel Mittel (WS) zur Windsichtung vorgesehen. Zwischen dem Prozessschritt V5 der Zerkleinerung, vorzugsweise bei 30 mm, insbesondere bei 20 mm, und dem Prozessschritt V7 der Auftrennung der verbleibenden Fraktionen ist ein Prozessschritt V6 vorgesehen, in dem eine zweite Rohsandfraktion RS2 mittels einer Siebeinrichtung SE2 abgetrennt wird. Die Lochgröße der Siebeinrichtung SE2 liegt vorzugsweise im Bereich von 4 - 6 mm.

Mit Hilfe des erfindungsgemäßen Verfahrens und der erfindungsgemäßen Anlage werden als Endprodukte eine Rohflusenfraktion LF, die im Mittel ein Schüttgutgewicht < 0,2 t/m³ aufweist, und eine Rohgranulatfraktion SF, die im Mittel ein Schüttgutgewicht > 0,3 t/m³ aufweist, erhalten, die nach einer Veredelung einer stofflichen Verwertung zugeführt werden können.

### Bezugszeichenliste

- SSF: Shredder-Schwerfraktion
- SLF: Shredder-Leichtfraktion
- LF: Leichtfraktion (Rohflusen)
- SF: Schwerfraktion (Rohgranulat)
- KA: metallarme kunststoffreiche Abfälle
- 81,82: Aufgabebehälter
- V1-V7: Prozessschritte
- MA1: Magnetabscheider
- RS1: erste Rohsandfraktion
- SE1: erste Siebeinrichtung
- NE1: Mittel zur Abscheidung nichtferromagnetischer Metallteile
- ST: Mittel zur Luftstromtrennung
- MH: Hammermühle
- RS2: zweite Rohsandfraktion
- SE2: Siebeinrichtung
- FE: ferromagnetischen 8estandteile
- NE: nichtferromagnetische Metallteile
- ST: Mittel zur Schwergutabtrennung
- SG: Schwergut
- FE: ferromagnetische 8estandteile
- WS: Mittel zum Auftrennen in eine Leichtfraktion und eine Schwerfraktion

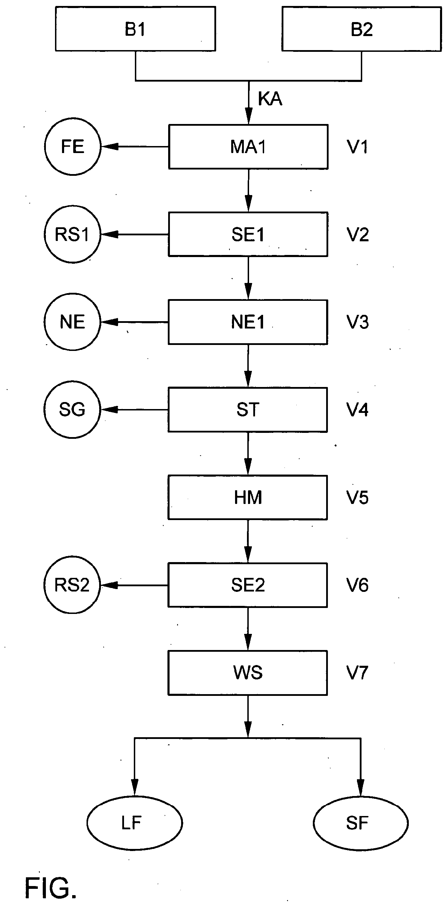

## Patentansprüche

1. Verfahren zur Aufbereitung von metallarmen kunststoffreichen Abfällen (KA), bei dem die kunststoffreichen Abfälle (KA) zumindest in eine Leichtfraktion (LF) und eine Schwerfraktion (SF) aufgetrennt werden, mit folgenden aufeinanderfolgenden Verfahrensschritten (V1-V7):
- Abtrennen von ferromagnetischen Bestandteilen (FE) aus den kunststoffreichen Abfällen (V1),
- Abtrennen einer ersten Rohsandfraktion (RS1) von den metallreduzierten kunststoffreichen Abfällen (V2),
- Zerkleinern der nach der Abtrennung der ersten Rohsandfraktion (RS1) verbleibenden metallreduzierten kunststoffreichen Fraktion (V5),
- Abtrennen einer zweiten Rohsandfraktion (RS2) nach der Zerkleinerung der verbleibenden kunststoffreichen Fraktion (V6),
- Auftrennen der verbleibenden kunststoffreichen Fraktion in eine Leichtfraktion (LF) und eine Schwerfraktion (SF), (V7), wobei
nach dem Abtrennen der ersten Rohsandfraktion (RS1) und vor dem Zerkleinern der nach der Abtrennung der ersten Rohsandfraktion (RS1) verbleibenden metallreduzierten kunststoffreichen Fraktion in einem Verfahrensschritt (V3) eine Abtrennung von nichtferromagnetischen Metallteilen (NE) von der kunststoffreichen Fraktion erfolgt und wobei nach der Abtrennung der nichtferromagnetischen Metallteile (NE) und vor dem Zerkleinern der nach der Abtrennung der ersten Rohsandfraktion (RS1) verbleibenden metallreduzierten kunststoffreichen Fraktion in einem Verfahrensschritt (V4) eine Schwerguttrennung (SG) durchgeführt wird.

2. Verfahren nach Anspruch 1, **dadurch gekennzeichnet, dass** die Abtrennung der ersten Rohsandfraktion (RS1) von den metallreduzierten kunststoffreichen Abfällen durch Siebung, insbesondere durch eine Siebung mit einer Lochgröße im Bereich von 10 -14 mm, insbesondere einer Lochgröße im Bereich von 10 - 12 mm erfolgt.

3. Verfahren nach Anspruch 1 oder 2, **dadurch gekennzeichnet, dass** die Abtrennung der zweiten Rohsandfraktion (RS2) durch Siebung, vorzugsweise durch eine Siebung mit einer Lochgröße im Bereich von 4 - 8 mm, insbesondere im Bereich von 4 - 6 mm, erfolgt.

4. Verfahren nach einem der Ansprüche 1 bis 3, **dadurch gekennzeichnet, dass** die Auftrennung der verbleibenden kunststoffreichen Fraktion in die Leichtfraktion (LF) und die Schwerfraktion (SF) durch Windsichtung erfolgt.

5. Verfahren nach einem der Ansprüche 1 bis 4, **dadurch gekennzeichnet, dass** die Zerkleinerung der nach der Abtrennung der ersten Rohsandfraktion (RS1) verbleibenden kunststoffreichen Fraktion derart durchgeführt wird, dass das Volumen der in der kunststoffreichen Fraktion enthaltenen Bestandteile der Leichtfraktion (LF) vergrößert wird.

6. Verfahren nach einem der Ansprüche 1 bis 5, **dadurch gekennzeichnet, dass** die aufzubereitenden metallarmen kunststoffreichen Abfälle (KA) einen Metallanteil von < 20%, insbesondere ca. 5 % an der Gesamtmenge aufweisen.

7. Verfahren nach einem der Ansprüche 1 bis 6, **dadurch gekennzeichnet, dass** die erzeugte Leichtfraktion (LF) im Mittel ein Schüttgutgewicht < ca. 0,2 t/m³ und die erzeugte Schwerfraktion (SF) im Mittel ein Schüttgutgewicht > ca. 0,3t/m³ aufweist.

8. Verfahren nach einem der Ansprüche 1 bis 7, **dadurch gekennzeichnet, dass** die aufzubereitenden kunststoffreichen Abfälle (KA) zumindest zum Teil Shredder-Rückstände metallhaltiger Stoffströme sind.

9. Verfahren nach einem der Ansprüche 1 bis 8, **dadurch gekennzeichnet, dass** die aufzubereitenden kunststoffreichen Abfälle (KA) zumindest zum Teil metallarme Kunststoffabfälle sind, die zumindest teilweise in Fahrzeug-Shredderprozessen erzeugt wurden und insbesondere eine Shredder-Leichtfraktion (SLF) und/oder eine Shredder-Schwerfraktion (SSF) aufweisen.

10. Anlage zur Aufbereitung von metallarmen kunststoffreichen Abfälle (KA), **dadurch gekennzeichnet, dass** Mittel nacheinander angeordnet sind, mit denen nacheinander folgende Verfahrensschritte (V1-V7) durchführbar sind:
- Abtrennen von ferromagnetischen Bestandteilen (FE) aus den kunststoffreichen Abfällen (KA), (V1),
- Abtrennen einer ersten Rohsandfraktion (RS1) von den metallreduzierten, kunststoffreichen Abfällen (V2),
- Zerkleinern der nach dem Abtrennen der ersten Rohsandfraktion (RS1) verbleibenden kunststoffreichen Fraktion (V5),
- Abtrennen einer zweiten Rohsandfraktion (RS2) nach dem Zerkleinern der verbleibenden kunststoffreichen Fraktion (V6),
- Auftrennen der verbleibenden kunststoffreichen Fraktion in eine Leichtfraktion (LF) und eine Schwerfraktion (SF), (V7), wobei
nach den Mitteln (SE1) zum Abtrennen der ersten Rohsandfraktion (RS1) und vor den Mitteln (HM) zum Zerkleinern der nach dem Abtrennen der ersten Rohsandfraktion (RS1) verbleibenden kunststoffreichen Fraktion Mittel (NE1) zum Abtrennen von nichtferromagnetischen Metallfraktionen (NE) vorgesehen sind und nach den Mitteln (NE1) zum Abtrennen von nichtferromagnetischen Metallfraktionen (NE) und vor den Mitteln (HM) zum Zerkleinern der nach dem Abtrennen der ersten Rohsandfraktion (RS1) verbleibenden kunststoffreichen Fraktion Mittel (ST) zur Abtrennung von Schwergut (SG) mittels Luftstrom zur Separierung des Schwergutes vorgesehen sind.

11. Anlage nach Anspruch 10, **dadurch gekennzeichnet, dass** ein Magnetabscheider (MA1) zum Abtrennen der ferromagnetischen Bestandteile (FE) aus den kunststoffreichen Abfällen (KA) vorgesehen ist.

12. Anlage nach Anspruch 10 oder 11, **dadurch gekennzeichnet, dass** eine Siebeinrichtung (SE1) zum Abtrennen der ersten Rohsandfraktion (RS1), vorzugsweise mit einer Lochgröße im Bereich von 10-14 mm, insbesondere mit einer Lochgröße im Bereich von 10-12 mm, vorgesehen ist.

13. Anlage nach einem der Ansprüche 10 bis 12, **dadurch gekennzeichnet, dass** eine Siebeinrichtung (SE2) zum Abtrennen der zweiten Rohsandfraktion (RS2), vorzugsweise mit einer Lochgröße im Bereich von 4 - 8 mm, insbesondere im Bereich von 4 - 6 mm, vorgesehen ist.

14. Anlage nach einem der Ansprüche 10 bis 13, **dadurch gekennzeichnet, dass** zum Auftrennen der verbleibenden kunststoffreichen Fraktion in eine Leichtfraktion (LF) und eine Schwerfraktion (SF) Mittel (WS) zur Windsichtung vorgesehen sind.

15. Anlage nach einem der Ansprüche 10 bis 14, **dadurch gekennzeichnet, dass** die Mittel (MH) zum Zerkleinern der nach der Abtrennung der ersten Rohsandfraktion (RS1) verbleibenden kunststoffreichen Fraktion derart ausgebildet sind, dass das Volumen der in der kunststoffreichen Fraktion enthaltenen Bestandteile der Leichtfraktion (LF) vergrößert wird.

16. Anlage nach Anspruch 15, **dadurch gekennzeichnet, dass** die Mittel (MH) zum Zerkleinern der kunststoffreichen Fraktion als Hammermühle ausgebildet sind.

## Claims

1. Process for treating scrap (KA) that has a low metal content and a high plastic content, in which the scrap (KA) with a high plastic content is separated at least into a light fraction (LF) and a heavy fraction (SF), comprising the following successive process steps (V1-V7):
- segregating ferromagnetic constituents (FE) from the scrap with a high plastic content (V1),
- segregating a first raw sand fraction (RS1) from the scrap with a high plastic content and a reduced metal content (V2),
- comminuting the fraction with a high plastic content and a reduced metal content remaining after the segregation of the first raw sand fraction (RS1) (V5),
- segregating a second raw sand fraction (RS2) after the comminution of the remaining fraction with a high plastic content (V6),
- dividing the remaining fraction with a high plastic content into a light fraction (LF) and a heavy fraction (SF), (V7), wherein
after the segregation of the first raw sand fraction (RS1) and before the comminution of the fraction with a high plastic content and a reduced metal content remaining after the segregation of the first raw sand fraction (RS1), a segregation of non-ferromagnetic metal parts (NE) from the fraction with a high plastic content is performed in a process step (V3) and wherein, after the segregation of the non-ferromagnetic metal parts (NE) and before the comminution of the fraction with a high plastic content and a reduced metal content remaining after the segregation of the first raw sand fraction (RS1), a heavy material separation (SG) is carried out in a process step (V4).

2. Process according to Claim 1, **characterized in that** the segregation of the first raw sand fraction (RS1) from the scrap with a high plastic content and a reduced metal content is performed by screening, in particular by a screening with a hole size in the range of 10-40 mm, in particular a hole size in the range of 10-12 mm.

3. Process according to Claim 1 or 2, **characterized in that** the segregation of the second raw sand fraction (RS2) is performed by screening, preferably by screening with a hole size in the range of 4-8 mm, in particular in the range of 4-6 mm.

4. Process according to one of Claims 1 to 3, **characterized in that** the division of the remaining fraction with a high plastic content into the light fraction (LF) and the heavy fraction (SF) is performed by air classification.

5. Process according to one of Claims 1 to 4, **characterized in that** the comminution of the fraction with a high plastic content remaining after the segregation of the first raw sand fraction (RS1) is carried out in such a way that the volume of the constituents of the light fraction (LF) contained in the fraction with a high plastic content is increased.

6. Process according to one of Claims 1 to 5, **characterized in that** the scrap (KA) with a high plastic content and a low metal content that is to be treated has a metal content of < 20%, in particular about 5%, of the total amount.

7. Process according to one of Claims 1 to 6, **characterized in that** the light fraction (LF) produced has on average a bulk material weight of < about 0.2 t/m³ and and the heavy fraction (SF) produced has on average a bulk material weight of > about 0.3 t/m³.

8. Process according to one of Claims 1 to 7, **characterized in that** the scrap (KA) with a high plastic content that is to be treated is at least partly shredder remains of streams of material containing metal.

9. Process according to one of Claims 1 to 8, **characterized in that** the scrap (KA) with a high plastic content that is to be treated is at least partly plastics scrap with a low metal content that has been produced at least partly in vehicle shredder processes and comprises in particular a shredder light fraction (SLF) and/or a shredder heavy fraction (SSF).

10. Installation for treating scrap (KA) that has a low metal content and a high plastic content, **characterized in that** means with which the following process steps (V1-V7) can be carried out one after the other are arranged one after the other:
- segregating ferromagnetic constituents (FE) from the scrap with a high plastic content (KA), (V1),
- segregating a first raw sand fraction (RS1) from the scrap with a high plastic content and a reduced metal content (V2),
- comminuting the fraction with a high plastic content remaining after the segregation of the first raw sand fraction (RS1) (V5),
- segregating a second raw sand fraction (RS2) after the comminution of the remaining fraction with a high plastic content (V6),
- dividing the remaining fraction with a high plastic content into a light fraction (LF) and a heavy fraction (SF), (V7), wherein
after the means (SE1) for segregating the first raw sand fraction (RS1) and before the means (HM) for comminuting the fraction with a high plastic content remaining after the segregation of the first raw sand fraction (RS1), means (NE1) for segregating non-ferromagnetic metal fractions (NE) are provided and, after the means (NE1) for segregating non-ferromagnetic metal fractions (NE) and before the means (HM) for comminuting the fraction with a high plastic content remaining after the segregation of the first raw sand fraction (RS1), means (ST) for segregating heavy material (SG) by means of an air stream are provided for separating the heavy material.

11. Installation according to Claim 10, **characterized in that** a magnetic separator (MA1) is provided for segregating the ferromagnetic constituents (FE) from the scrap with a high plastic content (KA).

12. Installation according to Claim 10 or 11, **characterized in that** a screening device (SE1) for segregating the first raw sand fraction (RS1), preferably with a hole size in the range of 10-14 mm, in particular with a hole size in the range of 10-12 mm, is provided.

13. Installation according to one of Claims 10 to 12, **characterized in that** a screening device (SE2) for segregating the second raw sand fraction (RS2), preferably with a hole size in the range of 4-8 mm, in particular in the range of 4-6 mm, is provided.

14. Installation according to one of Claims 10 to 13, **characterized in that** means (WS) for air classification are provided for dividing the remaining fraction with a high plastic content into a light fraction (LF) and a heavy fraction (SF).

15. Installation according to one of Claims 10 to 14, **characterized in that** the means (MH) for comminuting the fraction with a high plastic content remaining after the segregation of the first raw sand fraction (RS1) are formed in such a way that the volume of the constituents of the light fraction (LF) contained in the fraction with a high plastic content is increased.

16. Installation according to Claim 15, **characterized in that** the means (MH) for comminuting the fraction with a high plastic content are formed as a hammer mill.

## Revendications

1. Procédé de préparation de déchets de matières plastiques à faible teneur en métaux (KA), dans lequel on divise les déchets de matières plastiques (KA) au moins en une fraction légère (LF) et une fraction lourde (SF), avec les étapes de procédé suivantes:
- séparer des composants ferromagnétiques (FE) hors des déchets de matières plastiques (V1),
- séparer une première fraction de sable brut (RS1) hors des déchets de matières plastiques à teneur en métaux réduite (V2),
- broyer la fraction de matières plastiques à teneur en métaux réduite restante après la séparation de la première fraction de sable brut (RS1) (V5),
- séparer une deuxième fraction de sable brut (RS2) après le broyage de la fraction de matières plastiques restante (V6),
- diviser la fraction de matières plastiques restante en une fraction légère (LF) et une fraction lourde (SF), (V7),
dans lequel, après la séparation de la première fraction de sable brut (RS1) et avant le broyage de la fraction de matières plastiques à teneur en métaux réduite restante après la séparation de la première fraction de sable brut (RS1), on effectue dans une étape de procédé (V3) une séparation de parties métalliques non ferromagnétiques (NE) hors de la fraction de matières plastiques et dans lequel, après la séparation des parties métalliques non ferromagnétiques (NE) et avant le broyage de la fraction de matières plastiques à teneur en métaux réduite restante après la séparation de la première fraction de sable brut (RS1), on effectue dans une étape de procédé (V4) une séparation de matériaux lourds (SG).

2. Procédé selon la revendication 1, **caractérisé en ce que** l'on effectue la séparation de la première fraction de sable brut (RS1) hors des déchets de matières plastiques à teneur en métaux réduite par criblage, en particulier par un criblage avec une taille de trous dans la plage de 10 - 14 mm, en particulier avec une taille de trous dans la plage de 10 - 12 mm.

3. Procédé selon la revendication 1 ou 2, **caractérisé en ce que** l'on effectue la séparation de la deuxième fraction de sable brut (RS2) par criblage, de préférence par un criblage avec une taille de trous dans la plage de 4 - 8 mm, en particulier dans la plage de 4 - 6 mm.

4. Procédé selon l'une quelconque des revendications 1 à 3, **caractérisé en ce que** l'on effectue la division de la fraction de matières plastiques restante en la fraction légère (LF) et la fraction lourde (SF) par triage à vent.

5. Procédé selon l'une quelconque des revendications 1 à 4, **caractérisé en ce que** l'on exécute le broyage de la fraction de matières plastiques restante après la séparation de la première fraction de sable brut (RS1) de telle manière que le volume des composants de la fraction légère (LF) contenus dans la fraction de matières plastiques soit augmenté.

6. Procédé selon l'une quelconque des revendications 1 à 5, **caractérisé en ce que** les déchets de matières plastiques à faible teneur en métaux à préparer (KA) présentent une proportion de < 20 %, en particulier d'environ 5 % de la quantité totale.

7. Procédé selon l'une quelconque des revendications 1 à 6, **caractérisé en ce que** la fraction légère produite (LF) présente en moyenne un poids de matières en vrac < environ 0,2 t/m³ et la fraction lourde produite (SF) présente en moyenne un poids de matières en vrac > environ 0,3 t/m³.

8. Procédé selon l'une quelconque des revendications 1 à 7, **caractérisé en ce que** les déchets de matières plastiques à préparer (KA) sont au moins en partie des résidus de déchiquetage de flux de matières contenant des métaux.

9. Procédé selon l'une quelconque des revendications 1 à 8, **caractérisé en ce que** les déchets de matières plastiques à préparer (KA) sont au moins en partie des déchets de matières plastiques à faible teneur en métaux, qui ont été produits au moins en partie lors de processus de déchiquetage de véhicules et présentent en particulier une fraction légère de déchiquetage (SLF) et/ou une fraction lourde de déchiquetage (SSF).

10. Installation de préparation de déchets de matières plastiques à faible teneur en métaux (KA), **caractérisée en ce que** des moyens sont agencés l'un derrière l'autre, avec lesquels des étapes de procédé successives (V1 - V7) peuvent être exécutées:
- séparer des composants ferromagnétiques (FE) hors des déchets de matières plastiques, (V1),
- séparer une première fraction de sable brut (RS1) hors des déchets de matières plastiques à teneur en métaux réduite (V2),
- broyer la fraction de matières plastiques restante après la séparation de la première fraction de sable brut (RS1) (V5),
- séparer une deuxième fraction de sable brut (RS2) après le broyage de la fraction de matières plastiques restante (V6),
- diviser la fraction de matières plastiques restante en une fraction légère (LF) et une fraction lourde (SF),
dans lequel, après les moyens (SE1) pour séparer la première fraction de sable brut (RS1) et avant les moyens (HM) pour broyer la fraction de matières plastiques restante après la séparation de la première fraction de sable brut (RS1), il est prévu des moyens (NE1) pour séparer des fractions métalliques non ferromagnétiques (NE) et, après les moyens (NE1) pour séparer des fractions métalliques non ferromagnétiques (NE) et avant les moyens (HM) pour broyer la fraction de matières plastiques restante après la séparation de la première fraction de sable brut (RS1), il est prévu des moyens (ST) pour la séparation de matières lourdes (SG) au moyen d'un courant d'air pour séparer les matières lourdes.

11. Installation selon la revendication 10, **caractérisée en ce qu'**il est prévu un séparateur magnétique (MA1) pour séparer des composants ferromagnétiques (FE) hors des déchets de matières plastiques (KA).

12. Installation selon la revendication 10 ou 11, **caractérisée en ce qu'**il est prévu un dispositif de criblage (SE1) pour séparer la première fraction de sable brut (RS1), de préférence avec une taille de trous dans la plage de 10 - 14 mm, en particulier dans la plage de 10 - 12 mm.

13. Installation selon l'une quelconque des revendications 10 à 12, **caractérisée en ce qu'**il est prévu un dispositif de criblage (SE2) pour séparer la deuxième fraction de sable brut (RS2), de préférence avec une taille de trous dans la plage de 4 - 8 mm, en particulier dans la plage de 4 - 6 mm.

14. Installation selon l'une quelconque des revendications 10 à 13, **caractérisée en ce qu'**il est prévu, pour diviser la fraction de matières plastiques restante en une fraction légère (LF) et une fraction lourde (SF), des moyens (WS) pour le triage au vent.

15. Installation selon l'une quelconque des revendications 10 à 14, **caractérisée en ce que** les moyens (HM) pour broyer la fraction de matières plastiques restante après la séparation de la première fraction de sable brut (RS1) sont réalisés de telle manière que le volume des composants de la fraction légère (LF) contenus dans la fraction de matière plastiques soit augmenté.

16. Installation selon la revendication 15, **caractérisée en ce que** les moyens (HM) pour broyer la fraction de matières plastiques sont constitués par un concasseur à marteaux.
